# EUROPÄISCHE PATENTSCHRIFT

(11) **EP 1 750 349 B1**
(45) Veröffentlichungstag und Bekanntmachung des Hinweises auf die Patenterteilung: **23.01.2008**
(21) Anmeldenummer: 05016723.8
(22) Anmeldetag: 02.08.2005
(51) Int. Cl.: H02K 1/27

(54) **Permanentmagnethalterung am Rotor**
Fastening of permanent magnets onto a rotor
Fixation des aimants permanents au rotor

(43) Veröffentlichungstag der Anmeldung: 07.02.2007
(73) Patentinhaber: ZF FRIEDRICHSHAFEN AG, 88046 Friedrichshafen (DE)
(72) Erfinder: Büttner, Hubertus, 97688 Bad Kissingen (DE); Röder, Manfred, 97422 Schweinfurt (DE); Vollmuth, Alfons, 97456 Hambach (DE)

(56) Entgegenhaltungen:
- EP-A- 0 143 693
- DE-A1- 4 213 374
- GB-A- 2 217 924
- US-A- 5 886 440

## Beschreibung

Die Erfindung betrifft einen gemäß dem Oberbegriff von Patentanspruch 1 ausgebildeten Permanentmagnet-Rotor für eine rotierende elektrische Maschine.

Aus der DE 100 53 692 A1ist eine elektrische Maschine mit einem Rotor bekannt, der zur Festlegung der Permanentmagnetpole an dessen Außenumfangsfläche als Nutkörper ausgebildete Haltemittel aufweist, wobei die aus einem faserverstärkten Kunststoff gefertigten Nutkörper mit einem Fußteil in eine zwischen jeweils zwei Permanentmagnetpolen im Joch des Rotors ausgebildete Nut eingesetzt sind und sich mit einem nach radial außen verbreiternden Kopfteil in fixierender Anlage an einander zugeneigten Parallelflächen dieser beiden Permanentmagnetpole befinden.

Mit diesen Nutkörpern können Permanentmagnetpole insbesondere bei einer als Innenläufer ausgebildeten elektrischen Maschine auch bei sehr hohen Drehzahlen von einigen Tausend Umdrehungen pro Minute sicher und definiert am Rotor gehalten werden. Es hat sich jedoch herausgestellt, dass die sich in das Joch erstreckenden Nuten zur Aufnahme der Nutkörper die Führung des magnetischen Flusses nachteilig in dem Joch beeinflussen, woraus Wirkungsgradeinbußen der elektrischen Maschine im motorischen und generatorischen Betrieb resultieren. Das Rotorjoch besteht üblicherweise aus einer Stapelung einer Vielzahl von Elektroblechlamellen. Beim Stanzen der Lamellen werden deren Randbereiche und in diesem Zusammenhang insbesondere auch die Berandung der Nuten strukturell beschädigt, was Unstetigkeiten im Verlauf der magnetischen Feldlinien und eine zumindest teilweise Schwächung des magnetischen Flusses zur Folge hat.

Die EP 0 143 693 A2 beschreibt einen gattungsgemäßen Rotor in Innenläuferbauart, dessen Außenumfangsfläche eine Mehrzahl gleichmäßig beabstandeter Permanentmagnete trägt. Die Magnete werden von jeweils zwei am Rotorjoch benachbarten, in axialer Richtung durchgängig verlaufenden und nach außen abstehenden ankerförmigen Haltevorsprüngen gehalten, wobei ein zwischen den Magneten und den Haltevorsprüngen noch bestehender Zwischenraum mit einem spritz- oder gießbaren Füllmaterial ausgefüllt wird, z.B. Aluminium oder einem Klebemittel, z.B. ein Epoxyd, Acryl oder Urethan. Durch die Geometrie der Magnete und der Haltevorsprünge wird somit eine formschlüssige, selbstarretierende Halterungsstruktur geschaffen. Eine gleichwirkende Anordnung zur Befestigung von Permanentmagneten an einem Rotor wird in der DE 42 13 374 A1 und der GB 2 217 924 A beschrieben.

Durch die erläuterte Anordnung kann eine strukturelle Störung im Material des Rotorjochs vermieden und im Joch eine ungehinderte Ausbreitung eines magnetischen Feldes realisiert werden.

Es besteht jedoch das Problem, dass beim Betreiben einer elektrischen Maschine mit einem zwischen dem Rotor und dem Stator befindlichen Luftspalt infolge der räumlich engen Anordnung der Permanentmagnete und der Haltevorsprünge zumindest ein Teil des Rotormagnetfeldes über die Haltevorsprünge kurz geschlossen werden und nicht in der gewünschten Weise in den Stator eintreten kann. Dieser Effekt kann eine erhebliche Wirkungsgradeinbuße zur Folge haben.

Von dieser Problemstellung ausgehend, soll ein Permanentmagnet-Rotor der eingangs genannten Art so verbessert werden, dass der Einfluss der Haltemittel bezüglich eines in einer elektrischen Maschine geführten magnetischen Flusses reduziert wird.

Das Problem wird bei einem gattungsgemäßen Permanentmagnet-Rotor mit den kennzeichnenden Merkmalen des Anspruchs 1 gelöst. Der erfindungsgemäße Permanentmagnet-Rotor zeichnet sich dadurch aus, dass die Haltevorsprünge an dem Permanentmagnet-Rotor in axialer Richtung unterbrochen ausgebildet sind und dass sich die Halteelemente in axialer Richtung über die gesamte Länge der Permanentmagnetpole erstrecken.

Durch die erfindungsgemäße Lösung kann der Einfluss der Halteelemente auf den Magnetkreis einer elektrischen Maschine erheblich reduziert werden und das Magnetfeld eines Permanentmagnetpols kann hauptsächlich in einen diesem radial gegenüberliegenden Statorpol der elektrischen Maschine eintreten. Zur mechanischen Fixierung der Halteelemente und der Permanentmagnetpole am Rotor genügt es beispielsweise, die Halteelemente lediglich stirnseitig über etwa jeweils 10-20 Blechlamellen, d.h. über eine Länge von etwa 3-7 mm, auszubilden. Die axial innenliegenden Blechlamellen weisen keine Haltevorsprünge auf. Es ist jedoch auch möglich, in axialer Richtung mehrere Bereiche mit Haltevorsprüngen vorzusehen.

Vorteilhafte Weiterbildungen der Erfindung sind in den Unteransprüchen aufgeführt. Vorteilhafterweise bestehen die Halteelemente aus einem nichtferromagnetischen Werkstoff, wodurch ein unmittelbarer magnetischer Kurzschluss über die Halteelemente vermieden wird.

Mit besonderem Vorteil sind die Halteelemente aus einem Kunststoff, beispielsweise als Spritzgussteil gefertigt.

Es ist günstig, wenn das Verhältnis der Höhe eines Haltevorsprungs zu der Höhe eines Permanentmagneten kleiner oder etwa gleich 2:3 beträgt. Auf diese Weise wird der Anteil parasitärer Streufelder innerhalb des Permanentmagnet-Rotors noch weiter erniedrigt.

Die Erfindung wird nachfolgend anhand einer Zeichnung beispielhaft erläutert.

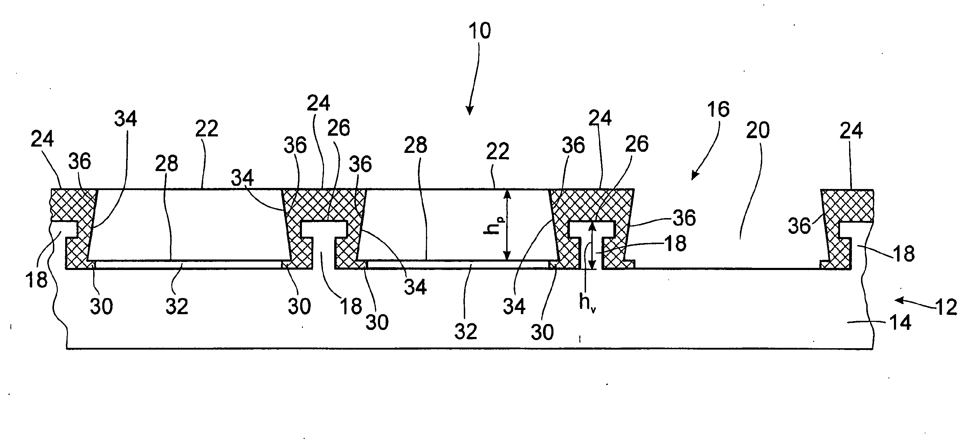

Die einzige Figur zeigt einen Ausschnitt eines Permanentmagnet-Rotors 10 einer zeichnerisch nicht weiter dargestellten elektrischen Maschine in Innenläuferbauart im Radialschnitt mit daran mittels Halteelementen 24 fixierten Permanentmagnetpolen 22. Der Permanentmagnet-Rotor 10 ist ringkreisförmig geschlossen ausgebildet, jedoch in der Figur zur Vereinfachung in einer Abwicklung dargestellt.

Der Rotor 10 umfasst zunächst ein Joch 12 aus einem Blechpaket 14, von dessen Außenumfangsfläche 16 eine Mehrzahl von gleichmäßig beabstandeten T-förmigen Haltevorsprüngen 18 in radialer Richtung abragt. Die Haltevorsprünge 18 erstrecken sich in axialer Richtung mit Unterbrechungen. Es ist jedoch auch möglich, die Haltevorsprünge 18 in dieser Richtung auch durchgehend über die gesamte Länge des Rotors 10 auszubilden. Die von den Haltevorsprüngen 18 gebildeten Zwischenräume 20 sind, wie nachfolgend detailliert beschrieben zur Aufnahme jeweils eines Permanentmagnetpols 22 vorgesehen.

Zur Fixierung der Permanentmagnetpole 22 an dem Joch 12 sind Halteelemente 24 aus einem nichtferromagnetischen Werkstoff, beispielsweise aus Kunststoff, vorgesehen, welche eine zu den T-förmigen Haltevorsprüngen 18 korrespondierend ausgebildete Nut 26 mit Hinterschneidungen aufweisen und wobei die Verbindungspartner 18, 24 formschlüssig in axialer Richtung zusammengefügt sind. Die Nut 26 bildet somit am Halteelement 24 einen innenliegenden Verbindungsabschnitt zur radialen Festlegung an dem Joch 12 aus. Das Kunststoff-Halteelement 24 und der Haltevorsprung 18 sind mit einer Presspassung ausgeführt, so dass diese auch in axialer Richtung eine unverlierbare Verbindung eingehen.

Aus der Figur ist weiter ersichtlich, dass die Permanentmagnetpole 22 im Querschnitt trapezförmig ausgeführt sind, wobei die Basisfläche 28 eines Permanentmagnetpols 22 auf einander zugerichteten Fortsätzen 30 eines Haltelementes 24 aufliegt und zwischen sich und dem Joch 12 einen definierten Radialspalt 32 ausbildet. In diesen kann nach erfolgter Fixierung der Magnetpole 22 ein Klebemittel, z.B. ein wärmeaushärtbares Harz, eingebracht werden, wodurch bei einer Drehbewegung des Rotors 10 eine zusätzliche Haltekraft für die Permanentmagnetpole 22 gegeben ist. Jedoch kann bei einem Entfall der Fortsätze 30 die Basisfläche 28 eines Permanentmagnetpols 22 auch unmittelbar am Joch 12 anliegen.

Die einander zugeneigten Seitenflächen 34 der Permanentmagnetpole 22 werden von dazu korrespondierend ausgebildeten, von an einem Halteelement 24 nach radial außen auseinander laufenden Halteflächen 36 abgestützt. Das heißt, jeweils ein Magnetpol 22 wird von zwei benachbarten Halteelementen 24 am Joch 12 fixiert, indem diese eine Schwalbenschwanzverbindung eingehen. Die Halteelemente 24 stehen radial über den Haltevorsprüngen 18 vor und erstrecken sich in axialer Richtung über die gesamte Länge der Permanentmagnetpole 22 und schließen radial in gleicher Höhe mit diesen ab. Somit ergibt sich an dem Rotor 12 im Bereich des elektromagnetisch wirksamen Luftspaltes eine geschlossene Umfangsfläche, wodurch ein ruhiger, geräuscharmer Lauf auch bei hohen Drehzahlen sichergestellt werden kann.

Zur Optimierung des Magnetkreises des Rotors 10 und der elektrischen Maschine sind die vom Joch 12 abstehenden Haltevorsprünge 18 gegenüber den Permanentmagnetpolen 22 merklich niedriger ausgebildet. Das Verhältnis der Höhe hv eines Haltevorsprungs 18 zu der Höhe hp eines Permanentmagneten 22 beträgt bei dem vorliegenden Ausführungsbeispiel etwa 2:3, wobei noch kleinere Verhältnisse ebenfalls günstig sind.

Die Halteelemente 24 kann anstelle aus Kunststoff alternativ auch aus einem dia- oder paramagnetischen metallischen Werkstoff, beispielsweise Kupfer bzw. Aluminium hergestellt werden. In diesen Fällen ist es sinnvoll, die Halteelemente 24 zur Unterdrückung von Wirbelstromverlusten lamelliert auszuführen.

### Bezugszeichenliste

- 10: Permanentmagnet-Rotor
- 12: Joch
- 14: Blechpaket
- 16: Außenumfangsfläche
- 18: Haltevorsprung
- 20: Zwischenraum
- 22: Permanentmagnetpol
- 24: Halteelement
- 26: Nut
- 28: Basisfläche
- 30: Fortsatz
- 32: Radialspalt
- 34: Seitenfläche
- 36: Haltefläche

## Patentansprüche

1. Permanentmagnet-Rotor (10) für eine elektrische Maschine, umfassend
- ein Joch (12), an dessen Umfangsfläche (16) mehrere Permanentmagnetpole (22) gleichmäßig verteilt angeordnet sind und wobei
- Halteelemente (24) ausgeführt sind, welche mit einem Verbindungsabschnitt (26) mit dem Joch (12) verbunden sind und mit einem Anlageabschnitt (36) an jeweils benachbarten Permanentmagnetpolen (22) anliegen und diese **dadurch** fixieren, wobei das Joch (12) Haltevorsprünge (18) aufweist, welche formschlüssig mit den Verbindungsabschnitten (26) der Halteelemente (24) verbunden sind,
**dadurch gekennzeichnet,**
**dass** die Haltevorsprünge (18) an dem Permanentmagnet-Rotor (10) in axialer Richtung unterbrochen ausgebildet sind und dass sich die Halteelemente (24) in axialer Richtung über die gesamte Länge der Permanentmagnetpole (22) erstrecken.

2. Permanentmagnet-Rotor nach Anspruch 1,
**dadurch gekennzeichnet,**
**dass** die Halteelemente (24) aus einem nichtferromagnetischen Werkstoff bestehen.

3. Permanentmagnet-Rotor nach Anspruch 1 oder 2,
**dadurch gekennzeichnet,**
**dass** die Halteelemente (24) aus einem Kunststoff gefertigt sind.

4. Permanentmagnet-Rotor nach einem der Ansprüche 1 - 3,
**dadurch gekennzeichnet,**
**dass** das Verhältnis der Höhe (hv) eines Haltevorsprungs (18) zu der Höhe (hp) eines Permanentmagnetpols (22) kleiner oder etwa gleich 2:3 beträgt.

## Claims

1. Permanent magnet rotor (10) for an electrical machine, comprising
- a yoke (12), on whose circumferential surface (16) a plurality of permanent magnet poles (22) are arranged such that they are distributed uniformly, and
- holding elements (24) being embodied which are connected to the yoke (12) with a connecting section (26) and bear against respectively adjacent permanent magnet poles (22) with a bearing section (36) and fix them thereby, the yoke (12) having holding projections (18), which are connected in an interlocking manner to the connecting sections (26) of the holding elements (24),
**characterized in that** the holding projections (18) are formed on the permanent magnet rotor (10) in such a way that they are interrupted in the axial direction, and **in that** the holding elements (24) extend in the axial direction over the entire length of the permanent magnet poles (22).

2. Permanent magnet rotor according to Claim 1, **characterized in that** the holding elements (24) are made from a non-ferromagnetic material.

3. Permanent magnet rotor according to Claim 1 or 2, **characterized in that** the holding elements (24) are manufactured from a plastic.

4. Permanent magnet rotor according to one of Claims 1 - 3, **characterized in that** the ratio of the height (hv) of a holding projection (18) to the height (hp) of a permanent magnet pole (22) is less than or approximately equal to 2:3.

## Revendications

1. Rotor à aimant permanent (10) pour machine électrique, comprenant
- une culasse (12) sur la surface périphérique (16) de laquelle sont distribués régulièrement plusieurs pôles d'aimant permanent (22) et
- des éléments de maintien (24) étant réalisés, lesquels sont reliés avec la culasse (12) par une section de liaison (26), reposent par une section d'appui (36) contre les pôles d'aimant permanent (22) voisins respectifs et de cette façon immobilisent ces derniers, la culasse (12) présentant des éléments en saillie de maintien (18) qui sont reliés par engagement géométrique avec les sections de liaison (26) des éléments de maintien (24),
**caractérisé en ce**
**que** les éléments en saillie de maintien (18) sur le rotor à aimant permanent (10) sont interrompus dans le sens axial et que les éléments de maintien (24) s'étendent dans le sens axial sur toute la longueur des pôles d'aimant permanent (22).

2. Rotor à aimant permanent selon la revendication 1, **caractérisé en ce que** les éléments de maintien (24) se composent d'un matériau non ferromagnétique.

3. Rotor à aimant permanent selon la revendication 1 ou 2, **caractérisé en ce que** les éléments de maintien (24) sont fabriqués dans une matière plastique.

4. Rotor à aimant permanent selon l'une des revendications 1 à 3, **caractérisé en ce que** le rapport entre la hauteur (hv) d'un élément en saillie de maintien (18) et la hauteur (hp) d'un pôle d'aimant permanent (22) est inférieur ou environ égal à 2:3.
